# EUROPÄISCHE PATENTSCHRIFT

(11) **EP 0 835 394 B1**
(45) Veröffentlichungstag und Bekanntmachung des Hinweises auf die Patenterteilung: **09.02.2000**
(21) Anmeldenummer: 95924187.8
(22) Anmeldetag: 12.07.1995
(51) Int. Cl.: F16D 1/09

(54) **SPANNSATZ**
CLAMP SYSTEM
SYSTEME DE SERRAGE

(30) Priorität: 13.09.1994 DE 9414881 U
(43) Veröffentlichungstag der Anmeldung: 15.04.1998
(73) Patentinhaber: Müllenberg, Ralph, D-41516 Grevenbroich (DE)
(72) Erfinder: Müllenberg, Ralph, D-41516 Grevenbroich (DE)
(74) Vertreter: Palgen, Peter, Dipl.-Phys. Dr.
(86) Internationale Anmeldenummer: DE9500912
(87) Internationale Veröffentlichungsnummer: WO9608661

(56) Entgegenhaltungen:
- DE-A- 2 329 940
- FR-A- 2 025 761
- US-A- 3 722 644
- US-A- 3 760 916

## Beschreibung

Die Erfindung bezieht sich auf einen Spannsatz der dem Oberbegriff des Anspruchs 1 entsprechenden Art.

Ein erster derartiger Spannsatz ist aus der DE 23 29 940 A 1 bekannt. Hierbei haben die einzelnen Konusringe jeweils eine Konusfläche und eine zylindrische Umfangsfläche, die unmittelbar an der gegenüberliegenden Umfangsfläche der Nabe oder Welle anliegt. Bei einer anderen ebenfalls gattungsgemäßen Ausführungsform nach der DE 24 58 229 A 1 haben die Konusringe zwei konische Umfangsflächen und ist ihnen jeweils ein weiterer Konusring zugeordnet, der eine konische und eine zylindrische Umfangsfläche aufweist. Hierbei üben die mit den Spannschrauben zusammenwirkenden Konusringe ihre Radialkraft also über die weiteren Konusringe auf die benachbarte zylindrische Umfangsfläche der Welle oder der Nabe aus.

Gemeinsam ist beiden Ausführungsformen, daß die Konusringe und der Umfangssteg des Doppelkonusrings die Bohrungen für die Spannschrauben und die Abdrückschrauben auf einen gemeinsamen Teilkreis und innerhalb der gleichen Teilung aufweisen. An einigen Stellen des Umfangs sind also in den Positionen, in denen normalerweise Spannschrauben säßen, Bohrungen für Abdrückschrauben angeordnet. Diese Ausführung vereinfacht die Herstellung auf einem Bohrwerk mit entsprechendem Teilapparat erheblich.

Die gleichmäßige Teilung, die fertigungsmäßige Vorteile hat, bringt aber auch Probleme mit sich, wenn es um die Gewährleistung der richtigen Montage des vorderen, den Köpfen der Spannschrauben zugewandten Konusringes geht, sei es im Werk, sei es auf dem Feld, z.B. bei Befestigungen von Bandantriebstrommeln für Förderbänder im Tagebau oder dergleichen. Es ist nämlich von vorn nicht ohne weiteres zu sehen, ob der Konusring in der richtigen Winkelstellung gegenüber dem Doppelkonusring steht, in der sich die verschiedenen Bohrungsarten gerade decken. Bei nachlässiger Montage tritt manchmal der Fall ein, daß die Gewindebohrungen in dem vorderen, den Köpfen der Spannschrauben zugewandten Konusring, die dem Lösen dieses Konusrings von dem Doppelkonusring dienen, gerade in Gewindebohrungen in dem Umfangssteg des Doppelkonusrings gegenüberstehen, die für das Lösen des den Köpfen der Spannschrauben abgewandten Konusrings vorgesehen sind. Da die Zahlen der Abdrückschrauben für das Lösen des vorderen und des hinteren Konusrings gleich sind und die Abdrückschrauben gleichmäßig über den Umfang verteilt sind, kann es also sein, daß sämtliche Gewindebohrungen in dem vorderen, den Köpfen der Spannschrauben zugewandten Konusrings den Gewindebohrungen in dem Umfangssteg gegenüberliegen. Bei den Spannschrauben ist bei dieser Situation nichts festzustellen.

Wenn dann die Abdrückschrauben in die Gewindebohrungen des vorderen Konusrings eingeschraubt werden und auf die Gewindebohrungen in dem Umfangssteg treffen, ist einerseits das Abdrücken des vorderen Konusrings erschwert, weil kein richtiges Widerlager vorhanden ist, und werden außerdem die Gewindebohrungen in dem Umfangssteg so zerstört, daß unter Umständen ein Abdrücken des hinteren Konusrings nicht mehr möglich und der ganze Konusspannsatz nicht mehr lösbar ist.

Wenn ein solcher Fall eintritt, ist der Schaden also erheblich. Die Situation kann erst nach Jahren auftreten, wenn das Lösen des Spannsatzes an sich schon durch Korrosion und Verschmutzung nicht leicht ist.

Der Erfindung liegt die Aufgabe zugrunde, eine falsche Winkelstellung bei der Montage der Konusringe zu vermeiden.

Diese Aufgabe wird durch die in Anspruch 1 wiedergegebene Erfindung gelöst.

Durch die einfache Maßnahme der Versetzung einer Spannschraubenbohrung in Umfangsrichtung, so daß sie aus der Teilung herausfällt, gibt es nur eine Winkelstellung des vorderen Konusrings gegenüber dem Doppelkonusring, in welcher sich alle Spannschrauben bei der Montage einschrauben lassen. Wenn eine Schraube nicht einschraubbar ist, ist dies ein Zeichen dafür, daß die richtige Winkelstellung nicht vorliegt. Wenn eine Spannschraube an einer in der Teilung liegenden Stelle zufällig auf die außerhalb der Teilung gelegene Durchgangsbohrung in dem Umfangssteg trifft, passen alle anderen Schrauben nicht. Auf diese Weise ist eine Zwangskontrolle der richtigen Stellung des vorderen Konusrings gegenüber dem Umfangssteg durch ein auffälliges Indiz gegeben.

In der Zeichnung ist ein Ausführungsbeispiel der Erfindung dargestellt.
Fig. 1 zeigt eine Seitenansicht einer Konusspannanordnung, wobei der Spannsatz in einem durch die Achse gehenden Längsschnitt nach der Linie I-I in Fig. 2 wiedergegeben ist;
Fig. 2 zeigt eine Teilansicht gemäß Fig. 1 von links;
Fig. 3 bis 5 zeigen Teilquerschnitte durch den Spannsatz nach den Linien III-III und IV-IV in Fig. 2 und einen entsprechenden Teilquerschnitt bei einer fehlerhaften Montage.

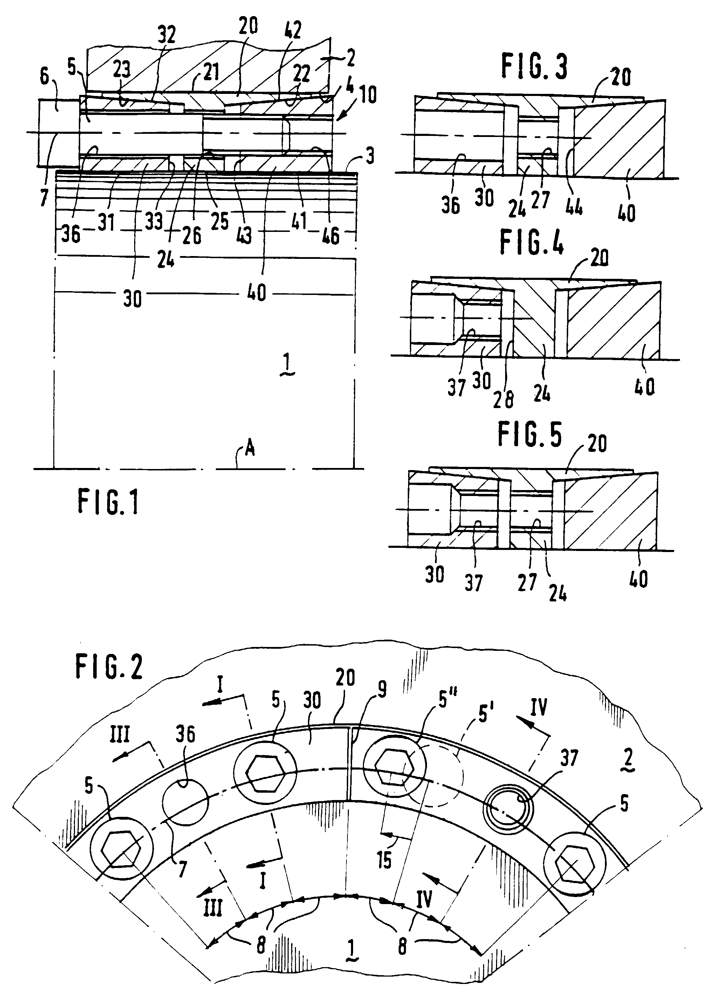

Der in Fig. 1 als Ganzes mit 10 bezeichnete Spannsatz dient zur Verbindung einer Welle 1 mit einer Achse A mit einem äußeren Bauteil 2 in Gestalt eines Zahnrades, einer Antriebsscheibe, einer Bandantriebstrommel oder allgemein einer Nabe. Der zylindrische Außenumfang 3 der Welle 1 hat einen geringeren Durchmesser als der zylindrische Innenumfang 4 des äußeren Bauteils 2. In dem Zwischenraum ist der Spannsatz 10 angeordnet.

Der Spannsatz 10 umfaßt in dem Ausführungsbeispiel einen Doppelkonusring 20 mit einer zylindrischen Außenumfangsfläche 21 und zwei inneren konischen Umfangsflächen 22,23, die einander entgegengesetzt derart geneigt sind, daß die größte Wandstärke, axial gesehen, in der Mitte des Doppelkonusrings 20 liegt. In der Mitte, also zwischen den Konusflächen 22,23 besitzt der Doppelkonusring 20 einen radial nach innen vorspringenden Umfangssteg 24, der mit seiner zylindrischen Innenumfangsfläche 25 auf der Außenumfangsfläche 3 der Welle 1 anliegt, so daß der Umfangssteg 24 Zentrieraufgaben übernehmen kann.

Dem Doppelkonusring 20 sind zwei einzelne Konusringe 30 und 40 zugeordnet, die in dem Ausführungsbeispiel jeweils eine zylindrische Innenumfangsfläche 31 bzw. 41 und eine konische Außenumfangsfläche 32 bzw.42 aufweisen, die mit den konischen Innenumfangsflächen 22 und 23 zusammenwirken. Die Konusflächen 22,42 und 23,32 haben im Selbsthemmungsbereich liegende Konuswinkel und liegen aneinander an während die inneren Stirnseiten 33,43 der Konusringe 30,40 noch axialen Abstand von dem Umfangssteg 24 haben.

Die Verspannung des Spannsatzes 10 erfolgt mittels axialer über den Umfang gleichmäßig verteilter Spannschrauben 5 mit Köpfen 6, die gemäß Fig. 1 von links Durchgangsbohrungen 36 in dem Konusring 30 und Durchgangsbohrungen 26 in dem Umfangssteg 24 durchgreifen und in Gewindebohrungen 46 in dem den Köpfen 6 abgelegenen Konusring 40 eingreifen.

Der Umfangssteg 24 lädt von den Konusflächen 22,23, in deren Bereich der Doppelkonusring 20 ziemlich dünnwandig ist, radial nach innen aus. Die radiale Erstreckung des Umfangssteges 24 beträgt in dem Ausführungsbeispiel etwa das Dreifache der größten Wandstärke im Bereich der Konusflächen 22,23. Der Bereich der radialen Ausladung des Umfangssteges 24 wird von den Konusringen 30,40 eingenommen, und es verlaufen auch die Spannschrauben 5 in diesen Bereich. Die Konusringe 30,40 sind also radial relativ dickwandig, so daß in ihrer radialen Erstreckung die Bohrungen für die Spannschrauben 5 und insbesondere deren Köpfe 6 untergebracht werden können. Wegen ihrer Dickwandigkeit sind die Konusringe 30,40 ziemlich stabil und verbrauchen ohne besondere Maßnahmen einen recht hohen Anteil Spannkraft der Schrauben 5 für ihre bloße Verformung, die nicht zur Klemmkraft beiträgt. Um den Verformungswiderstand zu verringern und möglichst viele von der Spannkraft der Schrauben 5 der Klemmwirkung zugutekommen zu lassen, ist in dem Ausführungsbeispiel der Konusring in einer durch die Achse gehende Ebene mit einem durchgehenden Schlitz 9 versehen.

Beim Anziehen der Spannschrauben 5 werden die Konusringe 30,40 axial gegeneinander gezogen, gleiten an den Konusflächen 22,42 bzw. 23,32 ab und weiten den Doppelkonusring 20 radial auf, so daß eine Verklemmung des äußeren Bauteils 2 an der Welle 1 stattfindet.

Da die Konusflächen 22,42 bzw. 23,32 im Selbsthemmungsbereich liegen, findet eine Umsetzung der axialen Spannkraft der Spannschrauben 5 in radiale Klemmkraft mit relativ hohem Wirkungsgrad statt. Die Selbsthemmung hat aber andererseits zur Folge, daß der einmal angezogenen Spannsatz 10 sich nicht von selbst wieder lösen läßt, sondern es besonderer Maßnahmen zur Lösung bedarf, die anhand der Fig. 2 bis 5 erläutert werden.

Alle Spannschrauben liegen auf einem gemeinsamen Teilkreis 7 in einer gleichförmigen Teilung, die in Fig. 2 durch den Winkel 8 zwischen je zwei in Umfangsrichtung aufeinanderfolgenden Bohrungsstellen angedeutet ist. An einigen Stellen, z.B. drei gleichmäßig verteilten Stellen sind an den betreffenden Teilungspositionen keine Spannschrauben 5, sondern vorbereitete Gestaltungen für Abdrückschrauben vorgesehen.

Eine solche Gestaltung ist Gegenstand der Fig. 3. Der Konusring 30 besitzt an dieser Stelle eine Durchgangsbohrung 36, der Umfangssteg 24 eine Gewindebohrung 27 und der Konusring 40 eine bohrungsfreie Stelle 44. Es ist gemäß Fig. 3 möglich, eine Schraube, z.B. eine herausgedrehte Spannschraube 5, an dieser Stelle einzuschrauben und den Konusring 40 von dem Doppelkonusring 20 nach rechts abzudrücken.

Eine andere Abdrückanordnung, die sich an einer anderen Umfangsstelle findet, ist in Fig. 4 wiedergegeben. Hier hat der Konusring 30 eine Gewindebohrung 37 und der Umfangssteg 24 eine bohrungsfreie Stelle 28. Wie der andere Konusring 40 an dieser Stellte gestaltet ist, spielt keine Rolle. Durch Einschrauben einer Schraube 5 in die Gewindebohrung 37 wird der Konusring 30 von dem Doppelkonusring 20 gemäß Fig. 4 nach links abgedrückt.

Auf diese Weise können beide Konusringe 30,40 unabhängig voneinander mit Sicherheit von dem Doppelkonusring 20 gelöst werden.

Bei der Montage des Spannsatzes 10 ist es von vorne schlecht zu erkennen, welche Art von Gestaltung des Umfangssteges 24 hinter der jeweiligen Bohrung des Konusrings 30 liegt. Es kann in ungünstigen Situationen der Fall eintreten, daß der Konusring 30 in einer solchen Winkelstellung mit dem Doppelkonusring 20 zusammengefügt wird, daß die Situation nach Fig. 5 auftritt, daß nämlich die Gewindebohrungen 37 und 27 miteinander zur Deckung kommen. Die Spannschrauben 5 lassen sich dann ohne weiteres einschrauben und anziehen. Die Verspannung kann also unbemerkt bei einer falschen gegenseitigen Stellung des Konusrings 30 und des Doppelkonusrings 20 erfolgen. Wenn dann nach einiger Zeit zum Lösen von vorne in die Gewindebohrung 37 eine Schraube 5 eingeschraubt wird, so trifft sie auf die Gewindebohrung 27, kann sich nur am Rand derselben abstützen und wird sich bei den erforderlichen großen Kräften in das Gewinde der Gewindebohrung 27 teilweise hineinarbeiten. Wenn es vielleicht noch möglich sein mag, den Konusring 30 von dem Doppelkonusring 20 nach links abzuziehen, ist dann aber das Gewinde der Gewindebohrung 27 ruiniert, so daß es nicht mehr möglich ist, eine Schraube in die Gewindebohrung 27 hineinzuschrauben, um den Konusring 40 zu lösen.

Um diese Situation zu verhindern, ist an einer Stelle eine Spannschraube 5" mit den zugehörigen Bohrungen um einen kleinen Winkel 15 in Umfangsrichtung aus der normalen Teilung versetzt, in der diese Spannschraube die in Fig. 2 gestrichelt angedeutete Stellung 5' einzunehmen gehabt hätte. Es gibt dann nur eine einzige Stelle des Konusrings 30 in Umfangsrichtung gegenüber dem Doppelkonusring 20, in der sich alle Spannschrauben 5 einschrauben lassen. Diese Stellung ist natürlich so gewählt, daß die Abdrückgestaltungen nach den Fig. 3 und 4 und nicht nach 5 vorliegen. Der Fall der Fig. 5 kann dann nicht eintreten. Wenn sich eine Spannschraube 5 oder alle Spannschrauben 5 bis auf eine nicht eindrehen lassen, so ist dies ein unübersehbares Indiz dafür, daß die Winkelstellung des Konusrings 30 nicht die richtige ist. In dem Ausführungsbeispiel liegt die versetzte Spannschraube 5" neben dem Schlitz 9. Auf diese Weise ist die außerhalb der Teilung gelegene Stelle leicht aufzufinden.

## Patentansprüche

1. Spannsatz (10) zum Verbinden eines eine zylindrische Ausnehmung (4) aufweisenden äußeren Bauteils (2), insbesondere einer Nabe, mit einem konzentrisch in der Ausnehmung (4) angeordneten, eine zylindrische Außenfläche (3) aufweisenden inneren Bauteil (1) insbesondere einer Welle,
mit einem Doppelkonusring (20) mit einer zylindrischen Umfangsfläche (21) und zwei einander entgegengesetzt angeordneten, eine im Selbsthemmungsbereich liegende Neigung aufweisenden Konusflächen (22,23), wobei die größte Wandstärke des Doppelkonusrings (20) axial gesehen im Innern des Doppelkonusrings (20) liegt,
mit zwei weiteren Konusringen (30,40), die jeweils eine konische Umfangsfläche (32,42), die mit einer der Konusflächen (22,23) des Doppelkonusrings (20) zusammenwirkt, aufweisen,
mit über den Umfang eines Teilkreises (7) in regelmäßiger Teilung (8) verteilten axialen, als Kopfschrauben ausgebildeten Spannschrauben (5),
mit axialen Abdrückschrauben, die in der gleichen Teilung (8) in den Positionen von Spannschrauben (5) an deren Stelle vorgesehen und mittels deren die Konusringe (30,40) von dem Doppelkonusring (20) axial abdrückbar sind,
und mit einem an dem Doppelkonusring (20) vorgesehenen, zwischen den Konusringen (30,40) in den Bereich der Spannschrauben (5) radial ausladenden Umfangssteg (24), der axiale Durchgangsbohrungen (26) für die Spannschrauben (5) an Stellen enthält, denen den Schraubenköpfen (6) zugewandten Konusring (30) Durchgangsbohrungen (36) und in dem den Schraubenköpfen (6) abgewandten Konusring (40) Gewindebohrungen (46) gegenüberliegen, während an über den Umfang verteilten anderen Stellen in dem Umfangssteg (24) bohrungsfreie Stellen (28) vorhanden sind, denen in dem den Schraubenköpfen (6) zugewandten Konusring (30) Gewindebohrungen (37) für Abdrückschrauben gegenüberliegen, und an über den Umfang verteilten wieder anderen Stellen in dem Umfangssteg (24) Gewindebohrungen (27) vorhanden sind, denen in dem den Schraubenköpfen (6) zugewandten Konusring (30) Durchgangsbohrungen (36) und in dem den Schraubenköpfen (6) abgewandten Konusring (40) bohrungsfreie Stellen (44) gegenüberliegen,
**dadurch gekennzeichnet**,
daß an einer Stelle eine Spannschraube (5) außerhalb der Teilung (8,8,8) vorgesehen ist.

## Claims

1. Clamp system (10) for connecting an outer component (2), in particular a hub, having a cylindrical opening (4) to an inner component (1) in particular a shaft, having a cylindrical external surface (3) and arranged concentrically within the opening (4).
with a biconical ring (20) having a cylindrical surface (21) and two mutually oppositely directed conical surfaces (22,23) having a conicity lying in the self-jamming range, the greatest wall thickness of the biconical ring (20) lying within the biconical ring (20) looking axially,
with two further conical rings (30,40), which each have a conical surface (32,42) which co-operates with a conical surface (22,23) of the biconical ring (20),
with axial clamping screws (5) in the form of headed screws having a regular distribution (8) around a pitch circle (7),
with axial thrust or pushing-off screws which are provided at the same spacing (8) in the positions of clamping screws (5) at their positions and by means of which the conical rings (30,40) can be pushed axially away from the biconical ring (20),
and with a radially projecting circumferential web (24) provided on the biconical ring (20) between the conical rings (30, 40) in the region of the clamping screws (5), the web having in it axial clearance bores (26) for the clamping screws (5) at the points which line up with the clearance bores (36) in the conical ring (30) nearest the heads (6) of the screws and screw-threaded bores (46) in the conical ring (40) furthest from the heads (6) of the screws, while at other points distributed circumferentially in the circumferential web there are bore-free points (28) which lie opposite screw-threaded bores (37) for thrust or pushing-off screws in the conical ring (30) nearest the heads (6) of the screws, and at still further points distributed circumferentially in the circumferential web (24) there are provided screw-threaded bores (27) which line up with screw-threaded bores (36) in the conical ring (30) nearest the heads (6) of the screws and with bore-free points (44) in the conical ring (40) furthest from the heads (6) of the screws,
**characterised in that**
at one point a clamping screw (5) is present offset from the uniform spacing (8,8,8,).

## Revendications

1. Système de serrage (10) servant à relier une pièce constitutive extérieure (2), présentant un évidement cylindrique (4), en particulier un moyeu, à une pièce constitutive intérieure (1), disposée concentriquement dans l'évidement (4), présentant une surface extérieure cylindrique (3), en particulier un arbre, comprenant :
• une bague biconique (20) avec une surface périphérique (21) cylindrique et avec deux surfaces coniques (22, 23) disposées de façon opposée, présentant une inclinaison qui se trouve dans la zone d'autoblocage, l'épaisseur de paroi la plus grande de la bague biconique (20) vue dans le sens axial, se trouvant à l'intérieur de la bague biconique (20),
• deux autres bagues coniques (30,40) présentant chacune une surface périphérique conique (32, 42), qui coopère avec l'une des surfaces coniques (22, 23) de la bague biconique (20),
• des boulons de serrage (5) axiaux, répartis selon une division régulière (8) sur le pourtour d'un arc de cercle (7), boulons qui sont constitués sous la forme de boulons à tête,
• des boulons à chasser axiaux prévus selon la même répartition (8) dans les positions des boulons de serrage (5) à leurs emplacements, et aux moyens desquels les bagues coniques (30, 40) peuvent être refoulées axialement hors de la bague biconique (20),
• et une nervure périphérique (24), prévue en saillie radiale entre les bagues coniques (30, 40) dans la zone des boulons de serrage (5), la nervure périphérique (24) comprend des alésages axiaux de passage (26) pour les boulons de serrage (5) aux endroits où se trouvent face à face les alésages (36) en regard de la bague conique (30) tournée vers les têtes de boulon (6) et les alésages filetés (46) de la bague conique (40) à l'opposé des têtes de boulon (6), tandis qu'en d'autres endroits, répartis sur le pourtour, il y a des emplacements (28) sans alésage dans la nervure périphérique (24), en regard desquels se trouvent les alésages filetés (37) prévus pour des boulons à chasser, dans la bague conique (30) tournée vers les têtes de boulon (6), et qu'en d'autres positions à nouveau réparties sur la périphérie de la nervure périphérique (24) sont prévus des alésages filetés (27), auxquels font face les alésages de passage (36) dans la bague conique (30) tournée vers les têtes de boulon (6) et des emplacements (44) exempts d'alésages dans la bague conique (40) à l'opposé des têtes de boulon (6),
caractérisé en ce que
il est prévu en un endroit un boulon de serrage (5) en dehors de la répartition (8,8,8).
